# EUROPEAN PATENT APPLICATION

(11) **EP 0 571 888 A1**
(43) Date of publication of application: **01.12.1993**
(21) Application number: 93108162.4
(22) Date of filing: 19.05.1993
(51) Int. Cl.: H01G 1/03, F16B 21/02

(54) **Automatic attachment system on a capacitor for mounting on an apparatus or appliance**

(30) Priority: 25.05.1992 IT UD920098
(71) Applicant: DUCATI ENERGIA S.p.A., I-40132 Bologna (IT)
(72) Inventor: Testi, Giancarlo, I-40132 Bologna (IT); Capponcelli, Moreno, I-40132 Bologna (IT)
(74) Representative: D'Agostini, Giovanni, Dr.

(57) **Abstract**

Automatic attachment system on capacitor (1) for mounting on apparatus or appliances, of the type in which the capacitor is endowed on its base with a protruding tang (3), characterized by the fact that said tang (3) departs from the base of the capacitor with a tang base (31) that branches into two transversally opposed elastically yielding wings (32) and shaped as an overturned "T", in order that:
· said tang can be inserted axially in a corresponding fissure (42) of a respective sheetplate or plate support (4) of the apparatus or appliance;
· said wings (32) pass through to the other side of said sheetplate or plate support (4) and
· it is possible to rotate said capacitors with said tang (3) within the said fissure, in order for them to be held by the elasticity of the material that makes the said tang (3-31-32).

## Description

This invention, has as an object, an automatic attachment system on a capacitor and respective capacitor and apparatus or appliance that supports it.

The apparatus or appliances destined to support capacitors are many and can concern apparatus or appliances that support electric motors, respective electric motors, or apparatus or appliances supporting antijamming apparatus or appliance filters and respective antijamming filters, as well as any other electric apparatus or appliances, not excluding lighting equipment.

As far as the use in electric motors is concerned, there are many electrical apparatus or appliances operated from an asynchronous monophase motor, in every case the motor, in order to start and maintain the rotation, must be connected duly to a capacitor.

The indicated values of the aforementioned capacitor (work voltage and capacity) depend on the type of motor, in particular from its power and mains voltage.

One deals therefore with electric capacitors and very variable dimensions: the most diffused range with regards to the dimensions is however that destined to the various types of electrical household appliances.

In this case we can have dimensions of the housings of the actual capacitors (cylindrical) with diameters of about 25-45 mm and heights of about 45-100 mm.

Electrical household appliance constructors, given the large quantity of apparatus or appliances made annually, are constantly researching to reduce component and assembly costs.

This research is reflected in the direction of the component constructors which should make proposals on the characteristics of ease of assembly of the components which they produce.

Until today, for safety reasons, capacitors have always been mounted with metallic bands, with brackets or with screws, nuts and washers.

All these systems will necessitate rather long mounting operations.

A known system of fastening with screws consists in endowing the bottom of the capacitor with a threaded tang, in such cases one thinks of introducing this threaded tang in a suitable hole of a support bracket of the apparatus or appliance for the starting of the motor, mounting an elastic washer on that tang, fixing a nut, positioning the screwdriver and screwing into place.

This type of connection, was necessary as long as the casing of the capacitor was metallic, needing therefore a contact to earthing sure in time, is no longer necessary since the casing of the capacitor is of plastic material, which is electrically insulating.

Already for many years the casing of the capacitor has been made of plastic material for its economic and practical advantages, notwithstanding that the mechanical connection continues to be carried out with a screwed tang, in the traditional way.

The evolution of the product, that has produced a consistent decrease in dimensions of capacitors equal to the indicated values, together with the use of more lightweight materials, plastic and resin types, has greatly reduced the weight of the capacitors.

These, therefore, in the range of dimensions indicated above, could be mounted, without any problem, in the apparatus or appliance without having to necessarily resort to tightening screws. The plastic materials of which the cases are composed allow the maximum range of possible choices, limited almost exclusively by the imagination of the designer.

At present on the market exist components of mass similar to those in question (also capacitors, in different sectors), that are equipped with means of rapid connection moulded in the plastic covering.

These last solutions, even if advantageous from the point of view of the production cost of the capacitor, do not yet have an effective attachment system which doesn't loosen, as it is known that in a motor there are always constant vibrations that could in time loosen the respective fixing system.

A solution of this type consists for example in making an automatic forked hook system, substantially on its side, which is obtained directly during moulding and is of the same plastic material as the shell of the capacitor.

Even this solution with the fork on its side constitutes however an unsafe system particularly against the vibrations.

The aim of the present invention is to obviate the above-mentioned drawbacks by means of the realization of an automatic attachment system low in price not needing of screws and fully safe against loosening, notwithstanding being subject to strong vibrations.

The problem is solved as claimed by means of a type of capacitor that has on its base a protruding tang, characterized by the fact that the said tang departs from the base of the capacitor with a base tang that branches into two transversally opposed elastically yielding wings shaped as an overturned "T" in order that:
· the said tang can be inserted axially in a corresponding fissure of a respective sheetplate or plate support of the apparatus or appliance;
· the said wings pass through to the other side of said sheetplate or plate support and
· is possible to rotate the said capacitor with the said tang within the said fissure, in order for it to be held by the elasticity of the material that makes the tang.

In this way we obtain a "bayonet" type joint which is rapid and safe.
Advantageously:
- said support besides the said fissure for the said tang will have corresponding housings orthogonally disposed and spaced for said protrusions of the said tang, as for example two holes or recesses.
- the said capacitor has:

· the respective protrusions of said wings placed at a predetermined distance from the axis of the said tang base,
· the extremities of said protrusions are substantially oriented towards the base of the capacitor;
· in order that with rotation after engagement, the said protrusions are fixed in corresponding recesses on the other side of the said support.

Advantages of the invention are many:
- the said tang can be obtained easily, shaping duly the matrix into which, in a suitable machine of high-pressure die-casting, the plastic material is injected for obtaining the casing of the capacitor, being composed of the same material as the last;
- as far as the previous point is concerned, unlike the use of a metallic insert, such as a threaded tang, widely and prevalently used, for safety reasons of fixing, it is not necessary to slow the operative time of the injection machine for inserting the tang and therefore results in a lower cost for the complete casing of the fixing element;
Advantages for the users are evident:
- in place of the circular hole in the sheetplate or plate, necessary for the introduction of the threaded tang, it suffices to work (in the cutting phase), a rectangular slot with two lateral holes. This does not involve any additional cost;
- the assembly of the capacitor is very rapid, it suffices to insert the said tang in the slot and rotate the capacitor 90°, until the protrusions are inserted (extremity of the wings of the "bayonet") in the holes worked into the sheetplate.

One thinks, alternatively, about the previously described operations, necessary for mounting a capacitor with threaded tang.

Further advantage consists in the fact that there are no more risks of contact to earth, because the fixing element is of plastic material (insulating).

These and other advantages will become apparent from the successive description of preferential solutions of realization with the help of the attached designs the details of execution of which are not to be considered limiting but only given as an example.

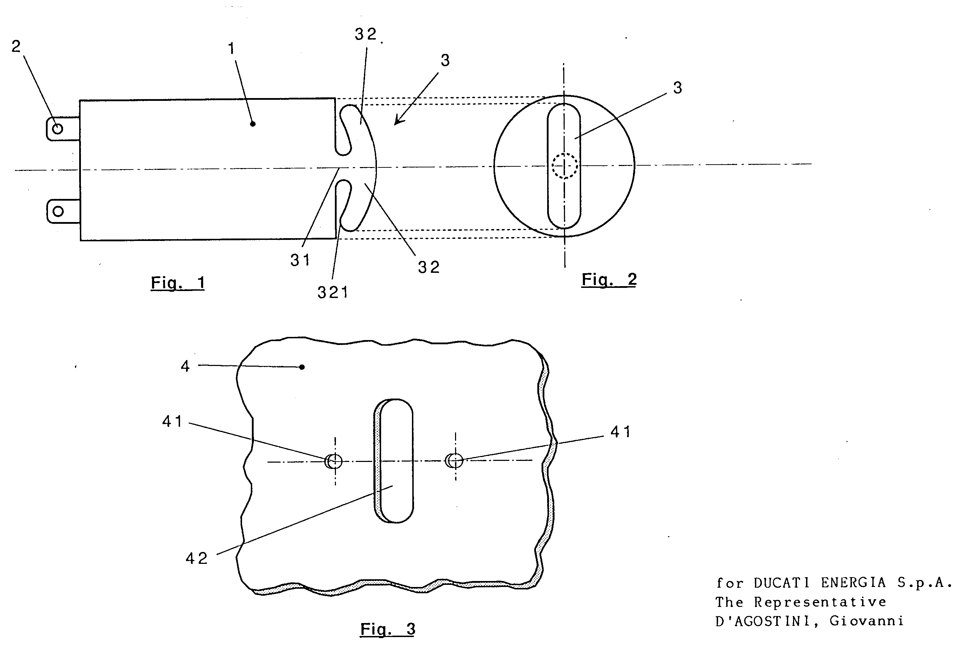

Figure 1 represents a side view of the capacitor with the new attachment system according to the invention.

Figure 2 represents a view from below of the capacitor with the respective tang according to invention.

Figure 3 represents the support plate or sheetplate of the capacitor with the respective fissure and fixing holes of the said tang.

As disclosed from these Figures the capacitor may be of any type and of traditional form, made generally with the shell in plastic material (1) with from one side the electric connectors (2) and on the other side the said "bayonet" attachment tang according to the invention (3). Said tang has a tang base 31 tang that branches transversely in contraposition with two wings (32) whose protrusions (321) are oriented in the direction of the base of the capacitor (1).

The plate or sheetplate support 4 in the apparatus or appliance where the capacitor must be installed (as for example washing-machines, dish-washers, or any electric motor, etc.) will present a fissure 42 which allows to pass to the other side, the respective protrusions 32-321 of the said tang 3 to make possible its rotation around the respective tang base 31 and in order that the respective protrusions 321 will be fixed in the corresponding recesses 41 in the said sheetplate on the opposite side.

Conveniently said recesses can be simple holes.

Naturally execution details can however change without altering the essence of the invention as by the following claim.

## Claims

1. Automatic attachment system on capacitor (1) for mounting on an apparatus or appliance, of the type in which the capacitor is endowed on its base with a protruding tang (3), characterized by the fact that said tang (3) departs from the base of the capacitor with a tang base (31) that branches into two transversally opposed elastically yielding wings (32) and shaped as an overturned "T", in order that:
· said tang can be inserted axially in a corresponding fissure (42) of a respective sheetplate or plate support (4) of the apparatus or appliance;
· said wings (32) pass through to the other side of said sheetplate or plate support (4) and
· it is possible to rotate the said capacitor with the said tang (3) within the said fissure, in order for to it be held by the elasticity of the material that makes the said tang (3-31-32).

2. Capacitor of the type endowed on its base with a protruding tang (3), characterized by the fact that said tang (3) departs from the base of the capacitor with a tang base (31) that branches into two transversally opposed elastically yielding wings (32) and shaped as an overturned "T".

3. Automatic attachment system on capacitor according to claim 1, characterized by the fact that:
· the respective protrusions (321) of said wings (32) are placed at a predetermined distance from the axis of said tang base (31), said distance being less than the thickness of the plate,
· the extremities of said protrusions (321) are substantially orientated towards the base of the capacitor (1);
· in order that at rotation after engagement, the said protrusions (321) are fixed in corresponding recesses (41) on the other side of the said support (4).

4. Capacitors according to claim 2, characterized by the fact that:
· the respective protrusions (321) of the said wings (32) are positioned at a predetermined distance from the axis of the said tang base (31), said distance being less than the thickness of the plate,
· the extremities of the said protrusions (321) are substantially orientated towards the base of the capacitor (1).

5. Apparatus or appliance fitted with at least one capacitor made with the characteristics of claim 2 and mounted with a system according to the characteristics of claim 1.

6. Apparatus or appliance comprising an electric motor and fitted with at least one capacitor made with the characteristics of claim 2 and mounted with a system according to the characteristics of claim 1.

7. Filter comprising a capacitor according to the claims 1, 2 or 4, endowed with an attachment system according to the characteristics of claim 3.
